# EUROPEAN PATENT APPLICATION

(11) **EP 0 221 498 A2**
(43) Date of publication of application: **13.05.1987**
(21) Application number: 86114977.1
(22) Date of filing: 28.10.1986
(51) Int. Cl.: C08F 246/00, C08F 230/02, C09D 5/08

(54) **Anticorrosive copolymer emulsions and methods of using and preparing them**

(30) Priority: 31.10.1985 US 793389
(71) Applicant: S.C. JOHNSON & SON, INC., Racine, WI 53403-5011 (US)
(72) Inventor: Tsaur, Sheng-Liang, Racine, WI 53406 (US)
(74) Representative: Baillie, Iain Cameron

(57) **Abstract**

The present invention provides for an anticorrosive random copolymer characterized by:
(a) one or more ethylenically unsaturated monomers, copolymerized with
(b) an acceptable anticorrosive amount of a polymerizable surface-active alkylphosphate mononer.

The anticorrosive random copolymers and emulsifier-free emulsion copolymers are prepared by reacting an ethylenically unsaturated monomer(s) such as styrene, alpha-methylstyrene, butylacrylate, 2-ethylhexylacrylate and acrylic acid, with a polymerizable, surface-active alkylphosphate monomer. The emulsions are employed as binders for aqueous latex paints or can be used alone to coat and protect corrodible substrates. The copolymers protect the substrate from corrosion

## Description

The present invention relates to anti-corrosive random copolymers, anti-corrosive random emulsion copolymers, methods of inhibiting corrosion on a corrosion- susceptible substrate and methods of preparing random emulsion copolymers. In particular, a polymerizable surface active alkylphosphate monomer is reacted with an ethylenically unsaturated monomer resulting in an anti-corrosive copolymer.

In the polymer paint and coating industry a large number of films and paints are made in the latex form. A latex paint is a dispersion of polymer colloids in an aqueous
medium. These polymer colloids are made by the process of emulsion polymerization of desired monomers. When latex is applied to a surface, the water evaporates leaving the polymer particles which coalesce to form a uniform film on the surface of the substrate. A wide variety of polymer colloids can be synthesized in such a way to produce desirable coating characteristics with regard to hardness, wear resistance, color and protection to the material to which it is applied. However, there are many motivating factors for developing aqueous based latex paints and coatings to replace the currently used solvent based paints and coatings. These motivating factors include air pollution restrictions, increasing cost and possible restricted solvents, reduced fire hazard which can result in lower costs and greater safety, easier equipment clean-up, easier waste disposal, and the ecological acceptability of water based compositions.

For these reasons, aqueous latex paints and coatings are desirable. However, aqueous latex paints and coatings pose a potential problem when the substrate to be painted or coated is a corrodible substance, i.e., metal. A particularly annoying problem is the occurence of flash rusting which is the corrosion of the metal substrate during the drying process of an aqueous coating or paint. Other drawbacks to aqueous paints and coatings include early substrate rusting, inferior rheological properties, poorer drying characteristics, poor adhesion characteristics, higher water and oxygen permeabilities and poor performance on accelerated corrosion testing such as the salt spray test and the water soak test.

United States Patent 4,487,859 discloses a self-curing, water-dispersed emulsion or solution polymerized polymer containing copolymerized ethylenically unsaturated monomers including (a) alkylol acrylamide monomer, (b) functional monomers such as carboxyl, hydroxyl, amine or amide functional monomers, (c) a phosphated monomer, and (d) other ethylenically unsaturated monomers. These phosphorous-containing emulsion or solution polymerized polymers are suitable for use as paint binder and protective surface coating systems and provide corrosion protection. The phosphate monomers disclosed in U.S. Patent 4,487,859, include hydroxy alkylphosphate ester monomers containing at least one unsaturated double bond. The phosphated monomers can also be a phosphoric acid ester of an hydroxy alkyl acrylate or methacrylate or other hydroxyl-containing ethylenically unsaturated monomers, such as, for example, phosphated esters of 2-hydroxyethylmethacrylate, 2-hydroxyethylacrylate, similar hydroxyalkyl acrylates or methacrylates and allyl alcohols.

United States Patent 4,433,124 discloses adhesive compositions containing substantial amounts of a hydroxyl-containing polymerizable methacrylate and small amounts of (a) a polymerizable organic phosphate, (b) a tetrahydroquinolene salt of orthobenzoicsulfimide, (c) an organic hydroperoxide, and (d) water. These adhesive compositions have excellent adhesive strengths to plane surface properties, excellent oily surface-adhesion properties and cure at room temperatures in a very short period of time.

The present invention provides anti-corrosive copolymers and, optionally, emulsifier-free emulsion copolymers useful as binders in paint and coating compositions. The present copolymers and emulsions containing them provide excellent anti-corrosive properties to corrodible substrates when painted or coated over those substrates and, additionally, possess excellent adhesive properties. The absence of emulsifiers in the present emulsion system is advantageous because emulsifiers, generally speaking, are considered to detract from the physical and mechanical properties of aqueous-based coating compositions. See, for examples, A. J. Bergess, et al., JOCCA, Volume 64, Pages 175-185, 1981, and M. M. Lein, et al., Journal of Coatings Technologies, Volume 55, No. 703, Pages 81-90, 1983. The . present emulsion copolymer can optionally contain small quantities of emulsifiers if desired.

The present invention provides for an anticorrosive random copolymer characterized by:
(a) one or more ethylenically unsaturated monomers, copolymerized with
(b) an acceptable anticorrosive amount of a polymerizable surface-active alkylphospate monomer.

The method of the present invention for preparing the random copolymers is characterized by reacting the ethylenically unsaturated monomer, or mixture of monomers, with the polymerizable surface-active alkylphosphate monomer in water in the presence of a free radical initiator under conditions sufficient to cause random copolymerization of the monomers. This reaction results in emulsifier-free copolymer emulsion that is useful as a binder in latex paints or as a coating material for corrodible substrates such as steel. However, emulsifiers can optionally be added in small quantities to the reaction if desired. Corrodible substrates painted or coated with the present random copolymer are substantially resistant to corrosion.

Of particular interest in the practice of the present invention, one or more ethylenically unsaturated monomers employed in preparing latex paints, such as, for example, styrene, alpha-methylstyrene butylacrylate, acrylic acid and 2-ethylhexylacrylate, are randomly copolymerized with a methacryloyloxy polypropylene glycol acid phosphate (MPAP) in water in the presence of a free radical initiator. The amount of MPAP employed in the random copolymerization process is usually from about 0.5 to about 5 % by weight of the ethylenically unsaturated monomers. These emulsifier-free random emulsion copolymers can be used to coat metal surfaces to inhibit corrosion to the metal or can be used as a binder in aqueous latex paints to impart anticorrosive properties to the underlying painted substrate.

In practicing the present invention, random copolymers are produced by an emulsion polymerization reaction of ethylenically unsaturated monomers and a polymerizable surface-active alkylphosphate monomer. No emulsifying agent is required in this emulsion polymerization reaction.

When used herein, the term "copolymer" is meant to encompass polymers containing a polymerizable surface-active alkylphosphate monomer polymerized with one or more ethylenically unsaturated monomers, i.e., copolymer in its traditional meaning (two monomers), terpolymer, tetrapolymer, etc.

The ethylenically unsaturated monomers (hereinafter referred to as "monomer") are those monomers employed in the preparation of water-based paints and coating compositions, such as, for example, vinylic monomers, ethylenically unsaturated acids, esters of these acids and alkenyl aromatic compounds. Suitable monomers include alkylacrylates, alkylmethacrylates, unsaturated carboxylic acids, styrene, acrylonitrile, alpha-methylstyrene, derivatives of the above, and mixtures of the above. The exact monomer or mixture of monomers to be employed in a particular application is determined by the mechanical, physical and chemical properties desired for the end-use application of the polymer. One skilled in the art can readily determine the optimum monomer or monomer mixture to give the desired results. Preferred monomers include styrene, alpha-methyl styrene, butylacrylate, acrylic acid, 2-ethylhexylacrylate and mixtures thereof.

The polymerizable surface-active alkylphosphate monomer (hereinafter referred to as "comonomer") can be any surface-active polymerizable alkylphosphate monomer. The comonomer can be a polymerizable surface-active monoalkylphosphate, a polymerizable surface-active dialkylphosphate or mixtures thereof. Suitable comonomers include compounds of the formula 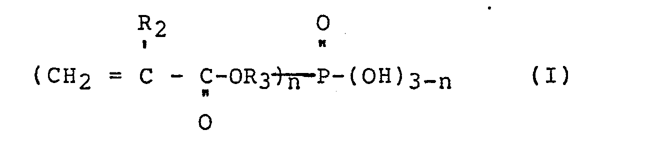 wherein
R₂ represents hydrogen, C₁-C₄ branched or straight chain alkyl;
n represents 1 or 2;
^{R}₃ represents:
   (a) 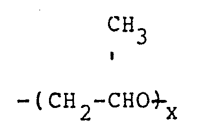 wherein x represents 3-15 inclusive;
   (b) 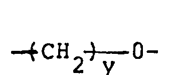 wherein y represents 4-20 inclusive or;
   (c) 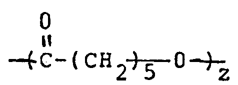 wherein z represents 1-4 inclusive.

Preferred alkylphosphates are those of Formula I wherein n represents 1,
R₂ represents -CH₃, R₃ represents 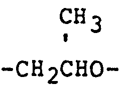 and m represents b or 1U. Also preterrea are those compounds wherein
R₃ represents (̵CH₂)̵_{y}-O- and y represents from 4-20 inclusive.

The alkylphosphate comonomers are prepared by reacting an hydroxy-containing monomer with polyphosphoric acid employing procedures well-known in the art, such as those described by F. B. Clarke, et al., JACS, Volume 88, Pages 4401-4405, 1966, and in U.S. Patent 4,433,124, both of which are incorporated herein by reference. After the reaction, the comonomer is extracted from the reaction mixture with a solvent, such as acetone, and recovered therefrom.

The present random copolymers are prepared employing conventional emulsion polymerization procedures in water with the exception that no emulsifying agent is required. For example, water containing a water-soluble free radical initiator and a polymerizable surface-active alkylphosphate monomer is added to a suitable reactor. The pH of this mixture is adjusted to between 7 and 8 by the addition of concentrated NH₄OH. The mixture is then purged with an inert gas such as nitrogen, and optionally heated. The monomer or mixture of monomers are then charged to the reactor with agitation whereby the polymerization occurs.

Optionally, a surfactant or emulsifier can be added in standard amounts to the present emulsion polymerization reaction to aid in the formation and/or stability of the emulsion. When emulsifiers are added to the present reactions they are advantageously added in amounts lower than the amounts usually required in standard emulsion polymerization processes which ranges anywhere from 1 to. 3 percent or more by total weight of the emulsion system. Emulsifiers are added to the present polymerization reaction in amounts of from about 0.01 to about 0.5 percent by total weight of the emulsion system and preferably from about 0.1 to about 0.3 percent by weight of the emulsion.

The particular emulsifying agent employed is not critical to the practice of the present invention. The standard emulsifiers used for emulsion polymerization processes are acceptable. These emulsifiers include the nonionic and anionic surfactants. Mixtures of various surfactants can also be employed. Suitable nonionic surfactants include (1) ethylene oxide derivatives of alkyl phenols, such as octylphenoxy polyethoxy ethanol and nonylphenoxy polyethoxy ethanol, both commercially available under the TRITON and SU_{R}FONIC brand names; (2) long chain ethoxylated alcohols, such as, linear or branched C₆ - c₁₅ primary alcohol. ethoxylates, commercially available under the NEODOL and ALFONIC brand names; and (3) the PLURONIC series of block copolymer surfactants which are commercially available from BASF Wyandotte. Suitable anionic surfactants include (1) alkyl sulfates such as lauryl sulfate; and (2) esters of sulfonated dicarboxylic acids, especially succinic acid.

In a preferred embodiment of the present invention, deoinized water, a free radical initiator and a minor portion of the comonomer are charged into a reactor. The pH of this mixture is adjusted to between about 7 and 8 by adding a base such as concentrated ammonium hydroxide. The monomer to be employed is added to a dropping funnel. The balance (major portion) of the comonomer in water is added to a second dropping funnel. Both dropping funnels are purged with nitrogen. A minor portion of monomer is added to the mixture in the reactor and the reactor is heated to the desired reaction temperature under a slow stream of nitrogen. The contents of both dropping funnels are then simultaneously added slowly to the reactor with agitation. Suitable agitation is accomplished with a mechanical stirrer rotating between 80 and 150 revolutions per minute (80-150 rpm). The reaction mixture is maintained at the reaction temperature with agitation until the polymerization reaction is complete. Upon completion of the reaction the resulting latex emulsion is cooled to room temperature. The pH of the emulsion can be adjusted, if desired, by the addition of ammonium hydroxide thereto.

The random copolymer of the present invention will contain an amount of comonomer effective to impart anticorrosive properties to the copolymer when applied to a metal substrate either neat or as a binder in a latex paint. Usually, the comonomer will comprise from about 0.5 to about 10 percent by weight of the copolymer, advantageously from about 1 to about 5 percent by weight of the copolymer and preferably about 2 percent by weight of the copolymer.

Any water-soluble material that can generate a free radical can be used as-the initiator. Free radical initiators include various peroxygen compounds such as persulfates, benzoylperoxide, t-butylhydroperoxide and similar peroxide catalysts and azo compounds, such as azobis-isobutylnitride and dimethylazobisisobuturate. Other initiating systems include alkali metal persulfate or ammonium persulfate with or without reducing agents adapted to activate the sulfate. The free radical initiators are ordinarily present in the reaction at a level of from about 0.01 to about 1% by total-weight of the monomer and comonomer.

At the conclusion of the polymerization reaction, the resulting random copolymer emulsion contains up to 50% by weight solids, i.e., up to 50% solid latexes.

The present copolymer emulsions will advantageously contain styrene (ST), alpha-methylstyrene (AMS), butylacrylate (BA), 2-ethylhexylacrylate (2-EHA) or mixtures thereof as the ethylenically unsaturated monomer component of the copolymer. Copolymer emulsions containing these monomers are particularly useful as primers. These copolymer emulsions can be used neat in priming applications or pigments can be added thereto to impart a desired color to the primer composition. Preferably, the copolymer emulsion will contain ST, AMS, BA and 2-EHA in addition to the polymerizable, surface-active alkylphosphate comonomer. The optimum monomer content will vary and will depend on the particular application at hand and the desired properties. Typically, the monomer content will be as follows:

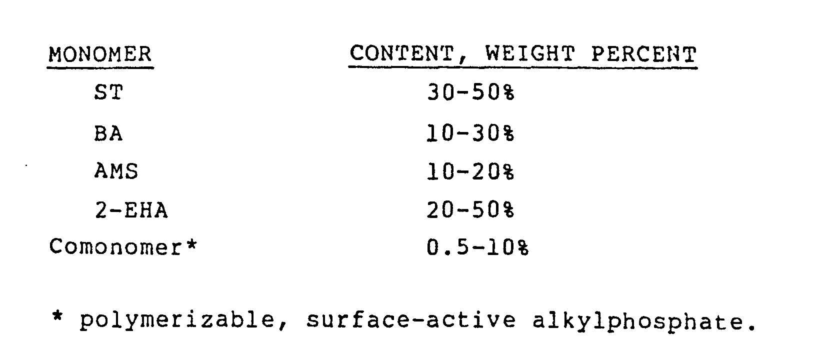

Preferred comonomers include methacryloyloxy polypropylene glycol acid phosphate having from 3 to 15 moles of propylene glycol and 6-(omega-hydroxylcaproyloxyl) acryloyloxy ethyl caproate acid phosphate (HEMA2CP).

The following examples illustrate the practice of the present invention, but should not be construed as limiting its scope.

### EXAMPLE 1

### Monomer: Mixture containing 55 grams (g) styrene and 60g butylacrylate

### Comonomer: Methacryloyloxy polypropylene glycol acid phosphate (PPG6EP) (1.68g)

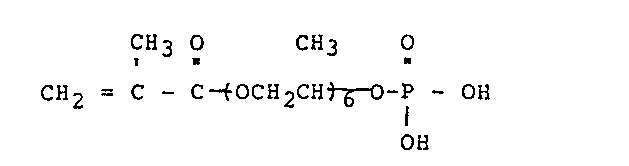

A solution of 200g water, 1.68g PPG6EP and 0.50g ammonium persulfate was added to a suitable reactor equipped with a stirrer, a temperature controller and a dropping funnel. The pH of the solution was adjusted to between 7 and 8 by adding concentrated NH₄0H. The solution was purged with nitrogen for 10 minutes. One tenth of the monomer mixture identified above was added to the reactor. The solution was heated to 75°-78° C under a slow stream of nitrogen and was held at this temperature for 4 minutes before the monomer was fed to the reactor. The balance of the monomer mixture was added to the reactor, with agitation, at a constant rate for 1.5 hours. After addition of the monomer, the reactants were maintained at 75°-78° C with agitation for 1.5 hours resulting in the formation of a-random emulsion copolymer.

### EXAMPLE 2

### Monomer: Mixture containing 75g styrene (St), 82g butylacrylate (BA) and 0.3g acrylic acid (AA).

### Comonomer: PPG6EP

A solution of 130g deionized water, 0.4g ammonium persulfate and 0.90g PPG6EP was charged to a suitable reactor, equipped with a stirrer, temperature controller and dropping funnels. The solution was neutralized with concentrated ammonium hydroxide to a pH between 7 and 8. The above monomer mixture was placed in a dropping funnel (Funnel A) and a solution of 30g deionized water and 2.7g of PPG6EP (comonomer), with a pH of between 7 and 8, was placed in a second dropping funnel (Funnel B). The dropping funnels were purged with nitrogen for 6 minutes. One tenth (1/10) of the monomer mixture was added to the reactor from Funnel A. The reactor was heated to a reaction temperature of 75°-78° C under a slow stream of nitrogen and held before feeding the monomer and comonomer. The monomer mixture in Funnel A and the PPG6EP solution in Funnel B were added simultaneously to the reactor, with agitation, over 1.5 hours. The reactants were maintained at this temperature, with agitation, for another 1.5 hours, resulting in the formation of an emulsion copolymer. This latex emulsion was cooled to room temperature and the pH was adjusted to 8.5 by adding concentrated ammonium hydroxide thereto.

### EXAMPLES 3 AND 4

Substantially the same procedures described in EXAMPLE 2 were employed to prepare the random emulsion copolymer of EXAMPLES 3 and 4. TABLE I below shows the reactants in EXAMPLES 3 and 4 in parts by weight.

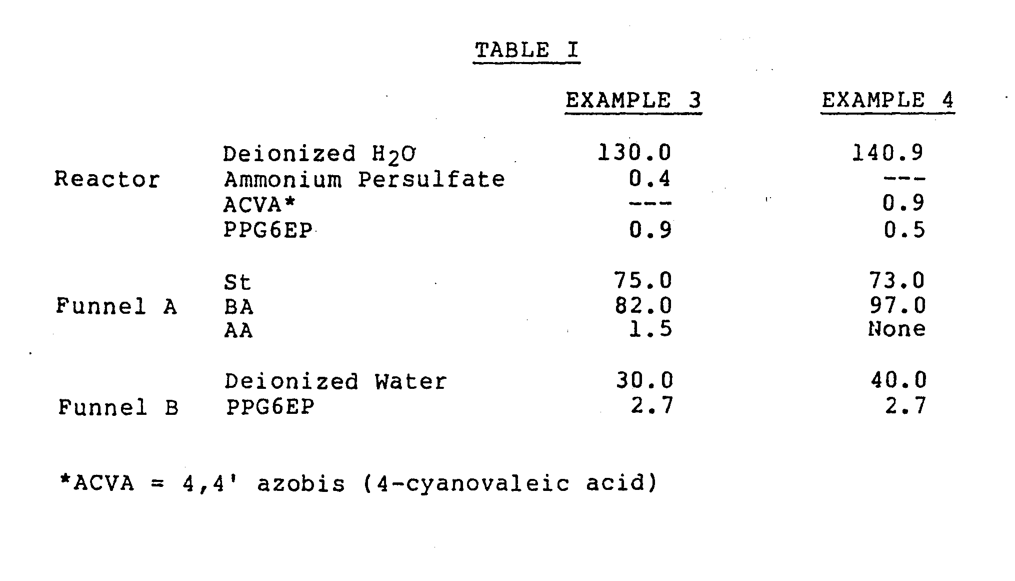

EXAMPLES 5 - 9

Substantially the same procedures described in EXAMPLE 2 were employed to prepare the random emulsion copolymers of EXAMPLES 5, 6, 7, 8 and 9. TABLE A below shows the reactants, in parts by weight, employed in the preparation of the emulsions prepared in EXAMPLES 5 - 9.

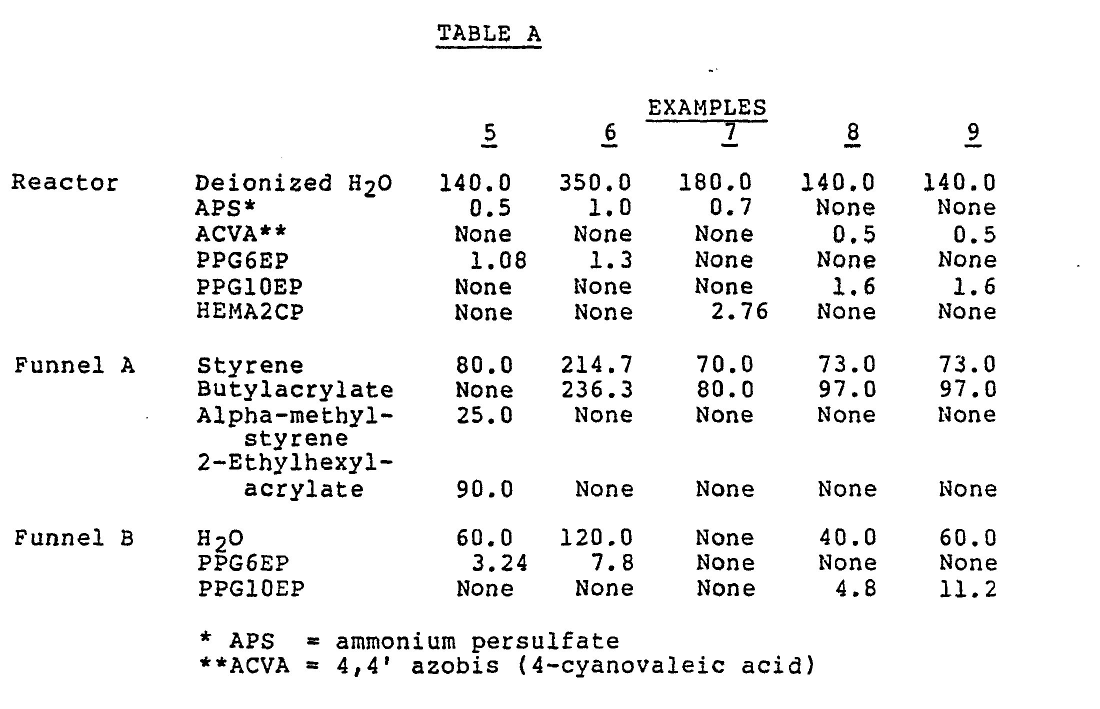

In similar operations, the various monomers and mixtures of monomers are copolymerized with the various polymerizable, surface-active alkylphosphates described herein to produce the present random emulsion copolymers.

The random emulsion copolymers can be formulated into aqueous based latex paint compositions and applied to corrodible substrates or, alternatively, the random emulsion copolymers can be applied neat to corrodible substrates (steel) to provide an anticorrosive protective coating thereon. When formulating the present emulsions into latex paints, the emulsions are admixed with standard latex paint components, such as, for example, surfactants, pigments, corrosion inhibiting agents, antimicrobials, antifoam agents, preservatives, plasticizers, dispersing agents and viscosity control agents employing standard paint formulation technology.

### EXAMPLE 10: CROSS-CUT TAPE TEST

The adhesion of the random copolymer prepared in EXAMPLE 1 was determined by an ASTM D3359-78 cross-cut tape test. The emulsion of EXAMPLE 1 was coated onto cold rolled steel panels using a film-applicator rod. The emulsion coating was air dried at room temperature for one week. A lattice pattern with 11 cuts in each direction was made in the film to the substrate. Pressure-sensitive tape was applied over the lattice and then removed. The adhesion of the coating was determined by the amount of coatings peeled off with the tape. Less than 5% of the coating peeled off with the tape. A random emulsion copolymer was prepared employing the same procedures of EXAMPLE 1 with the exception that WITCO PS400 non-polymerizable alkylphosphate surfactant (1.68 parts by weight) was employed in place of the PPG6EP polymerizable alkylphosphate of EXAMPLE 1. This emulsion copolymer using the non-polymerized alkylphosphate emulsifier was tested for adhesion properties by the same ASTM D3359-78 cross-cut tape test. More than 70% of the coating peeled off with the tape.

### EXAMPLE 11: FLASH RUSTING TEST AND'SALT SPRAY TEST

A flash rusting test was conducted on cold rolled steel panels. To these panels, one coat of emulsion copolymer was applied to a panel using a film applicator rod wherein the dried film thickness was between 0.8 and 1 millimeter (mm). The emulsion copolymer coating was air dried at room temperature for 1 hour. The degree of rusting on the panel was rated as none, light, medium and severe at the 1 hour post-application time.

A salt spray test was conducted on cold rolled steel panels. Two coats of the emulsion copolymers were applied on the steel panels using a film applicator rod wherein the total dried film thickness was between 1.6 and 2.0 mm. The second coat was applied after the first coat was air dried at room temperature for 2 hours. The panels were aged at room temperature for 1 week before the test. The salt spray test was carried out by making an X-cut through the coating and continuously exposing these panels to a salt fog of 5% by weight aqueous sodium chloride at 100° F. After the test, the corrosion resistance of the coatings was determined by the amount of rust formed on both scribed and non-scribed areas. The amount of rust on the non-scribed area was rated as none, few, medium and severe. The rust along the scribe was measured as the distance crept from the scribe.

The random emulsion copolymers of EXAMPLES 2, 3 and 4 were evaluated by the flash rusting test and the salt spray test described above. The results are listed below in TABLE II.

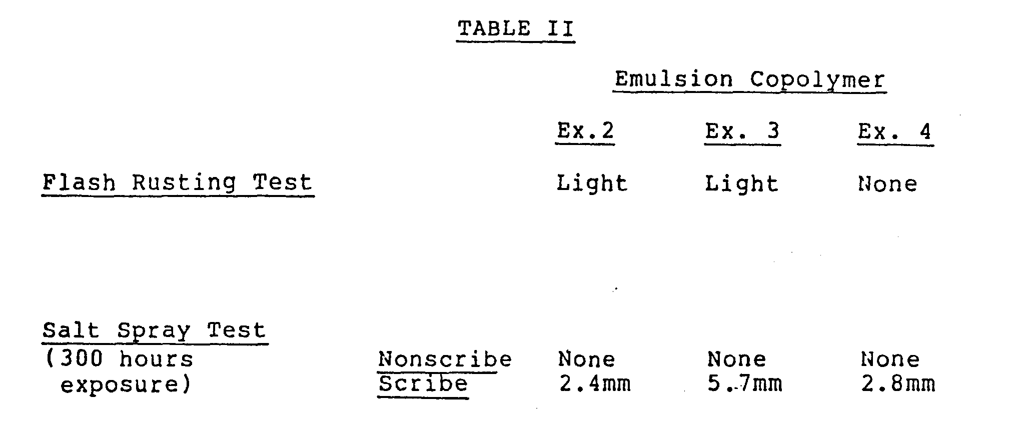

These results are in contrast to an emulsion copolymer prepared employing substantially the same procedures of EXAMPLE 2 with the exception that the reactor contained 130.0g distilled water, and l.Og ammonium persulfate. No polymerizable alkylphosphate surfactant was employed. Funnel A contained 59.7g styrene, 65.3g butylacrylate and 1.2g acrylic acid. Nothing was added to the reaction mixture from Funnel B. This emulsion copolymer was tested employing the above-described flash rusting test procedures and the salt spray test procedures. The results of the flash rusting test were severe. The results of the salt spray test were severe for the non-scribed areas after 100 hours exposure to the salt fog and for the scribed areas this emulsion totally failed after 100 hours exposure to the salt fog.

### EXAMPLE 12: SALT SPRAY TEST

The random emulsion copolymers prepared in EXAMPLES 5-9 were tested employing the procedures disclosed above for the salt spray test. The results of the test are listed below in TABLE III.

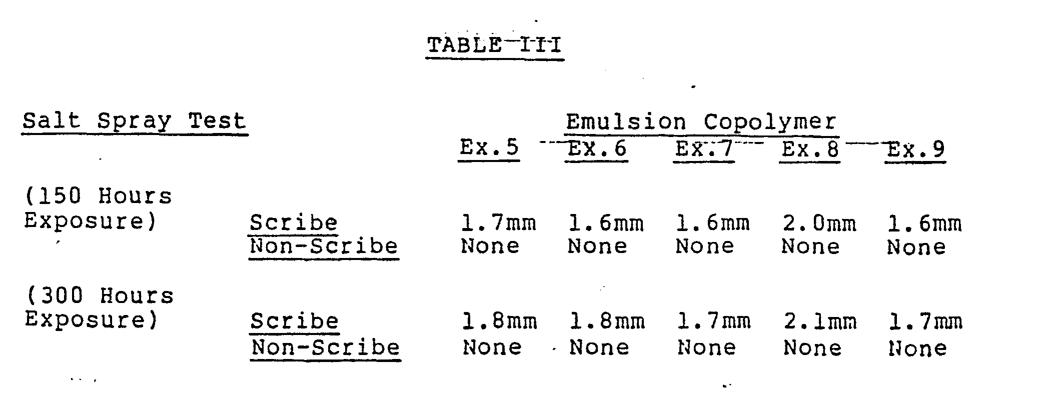

### EXAMPLE 13

Substantially the same procedures described in EXAMPLE 2 were employed to prepare a random emulsion copolymer wherein an alkaryl sulfonate surfactant, i.e., sodium dodecyl benzene sulfonate was added to the reaction mixture. The reactants, in parts by weight, are listed below:

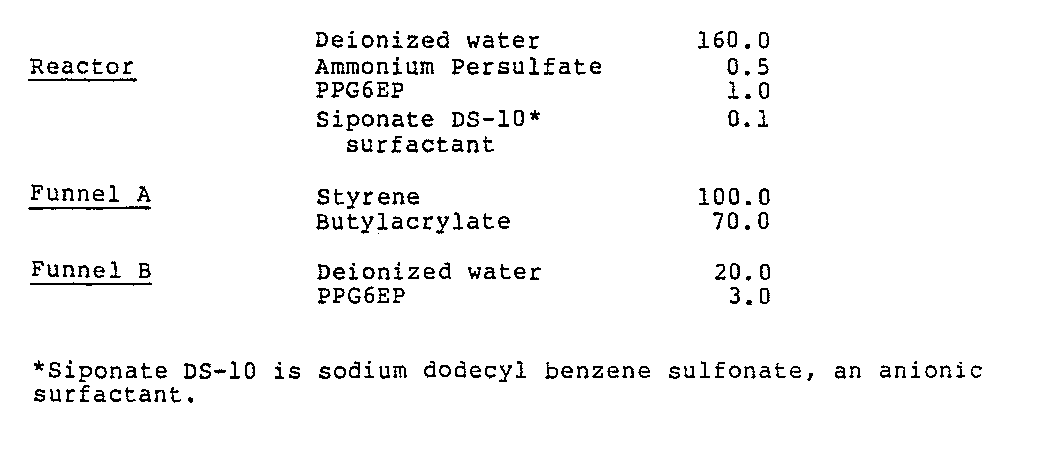

### EXAMPLE 14

The emulsion polymer made in EXAMPLE 2 was used as a binder to make a primer coating composition. The formulation of _{R}OHM and HAAS P-23-15A primer was duplicated with the exception that the emulsion polymer of EXAMPLE 2 was substituted for RHOPLEX MV-23 acrylic emulsion polymer which is the binder used in P-23-15A. The P-23-15A formulation is disclosed in ROHM and HAAS, Maintenance Coatings Technical Bulletin for RHOPLEX MV-23 (81BIO), 1984, which is incorporated herein by reference.

In similar operations, the random emulsion copolymers containing the various polymerizable surface-active alkylphosphate monomers described herein provide corrosion resistance to corrodible substrates when applied directly to the corrodible substrate neat or when formulated into a latex paint.

### Starting Materials

The ethenically unsaturated monomers are all known compounds. The polymerizable surface-active alkylphosphates can be prepared as described herein. Additionally, U.S. Patent 4,433,124, which is incorporated herein by reference, discloses polymerizable alkylphosphates that possess surface-active properties.

The following alkylphosphate comonomers were produced as follows:

### Comonomer Preparation Number 1

A reactor was equipped with a mechanical stirrer, a thermometer and two dropping funnels. To one funnel was added 430g polypropylene glycol monomethacrylate (6 moles of propylene glycol) and O.lg hydroquinone. To the other funnel was added 190g polyphosphoric acid. The contents of both funnels were added simultaneously to the reactor over a 30 minute period at room temperature. A moderate temperature rise was noted on mixing the reactants. The mixture was heated to 40°-60° C and held there for 2-3 hours until the reaction was complete. The crude product was dissolved in 600g acetone and neutralized with a concentrated ammonium hydroxide solution until the pH was in the range of 5-6. The ammonium salt of the inorganic phosphate was precipitated out from the solution and was separated by filtration. The acetone was evaporated using a rotary evaporator. 500 Grams of polypropylene glycol monomethacrylate phosphate ester (PPG6EP) was obtained.

### Comonomer Preparations 2 and 3

Substantially the same procedures described in Comonomer Preparation 1 were employed to prepare 6-(Omega-hydroxylcaproyloxyl)-acryloyloxyethyl caproate acid phosphate and methacryloyloxypolypropylene glycol acid phosphate containing 10 propylene glycol units. The formulas of these two polymerizable alkylphosphates are shown below: 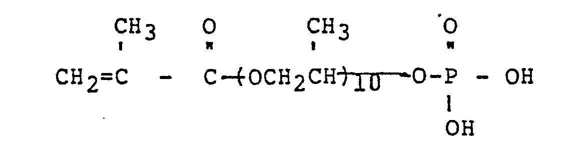 methacryloyloxy polypropylene glycol acid phosphate (PPGlOEP); and 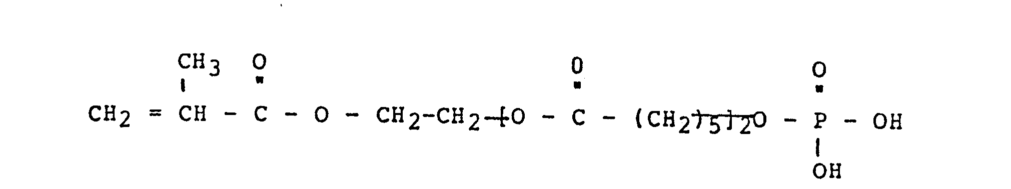 6-(omega-hydroxylcaproyloxyl)acryloyloxyethyl caproate acid phosphate (HEMA2CP).

## Claims

1. An anticorrosive random copolymer characterized by:
(a) one or more ethylenically unsaturated monomers, copolymerized with
(b) an acceptable anticorrosive amount of a polymerizable surface-active alkylphosphate monomer.

2. The copolymer of claim 1, characterized in that alkylphosphate monomer comprises from about 0.5 to about 10 percent by weight of the copolymer, and preferably from about 1 to about 4 percent by weight of the copolymer.

3. The copolymer of claim 1 or 2, characterized in that the ethylenically unsaturated monomers are alkylacrylates, alkylmethacrylates, unsaturated carboxylic acids, alkenyl aromatic compounds, acrylonitrile, or derivatives or mixtures thereof.

4. The copolymer of any of claims 1, 2 or 3, characterized in that the ethylenically unsaturated monomers are styrene, alpha-methylstyrene, butylacrylate, acrylic acid, 2-ethylhexylacrylate or mixtures thereof.

5. The copolymer of any of claims 1-4, characterized in that the polymerizable surface-active alkylphosphate monomer is a monoalkyphosphate, a dialkylphosphate or mixtures thereof.

6. The copolymer of any of claims 1-5, characterized in that the polymerizable surface-active alkylphosphate monomer is a compound or a mixture of more than one compound of the formula 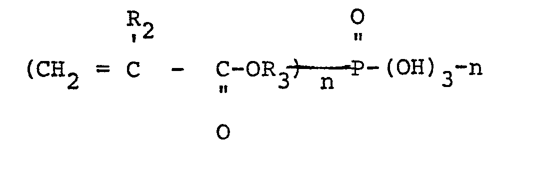 wherein
R₂ represents hydrogen or a C₁-C₄ branched or straight chain alkyl;
n represents 1 or 2; and
R₂ represents
(a) 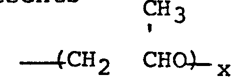 wherein x represents 3-15 inclusive;
(b) 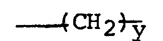 0 - wherein y represents 4-20 inclusive; or
(c) 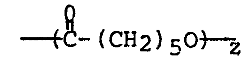 wherein z represents 1-4 inclusive.

7. An anticorrosive, emulsifier-free random copolymer emulsion according to any of claims 1-6 characterized by a free radical initiator and water.

8. The emulsion of claim 7, characterized in that it comprises up to about 50 percent by weight solids.

9. A method of inhibiting corrosion on a corrosion susceptible substrate characterized by coating the substrate with an effective corrosion inhibiting amount of an anticorrosive random copolymer of any of claims 1 to 6.

10. The method of claim 9, characterized in that the anticorrosive copolymer is applied neat to coat the substrate, or as a binder in a latex paint to coat the substrate.

11. A method of preparing an anticorrosive, emulsifier-free random emulsion copolymer characterized by contacting:
(a) an ethylenically unsaturated monomer with
(b) an acceptable anticorrosive amount of a polymerizable surface-active alkylphosphate monomer
in water in the presence of a free radical initiator under conditions sufficient to cause random copolymerization of the monomers.

12. The method of claim 11, characterized in that the ethylenically unsaturated monomer is an alky- acrylate, an alkylmethacrylate, an unsaturated carboxylic acid, an alkenyl aromatic compound, acrylonitrile or derivative thereof or mixtures thereof.

13. The method of claim 10 or 11, characterized in that the ethylenically unsaturated monomer is styrene, alpha-methylstyrene, butylacrylate, acrylic acid, 2-ethylhexylacrylate or mixtures thereof.

14. The method of any of claims 11, 12 or 13, characterized in that the free radical initiator is ammonium persulfate or 4,4' azobis (4-cyanovaliec acid).

15. The method of any of claims 11-14, characterized in that the alkylphosphate monomer is a monoalkylphosphate, a dialkylphosphate or mixtures thereof.

16. The method of any of claims 11-15, characterized in that the alkylphosphate monomer is a compound or mixture of more than one compound of the formula 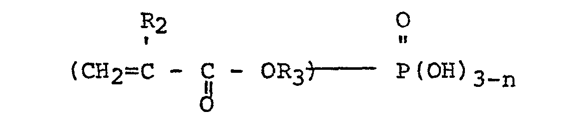 wherein
R₂ represents hydrogen or a Cₗ-C₄ branched or straight chain alkyl;
n represents 1 or 2; and
R₃ represents
(a) 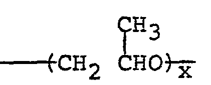 wherein x represents 3-15 inclusive;
(b) 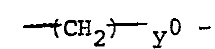 wherein y represents 4-20 inclusive; or
(c) 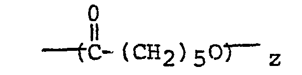 wherein z represents 1-4 inclusive.

17. The method of any of claims 11-16, characterized in that the weight ratio of ethylenically unsaturated monomer to alkylphosphate monomer is from about 99.5:0.5 to about 9:1, and preferably from about 99:1 to about 96:4.
